# FASCICULE DE BREVET EUROPEEN

(11) **EP 2 429 860 B1**
(45) Date de publication et mention de la délivrance du brevet: **10.07.2013**
(21) Numéro de dépôt: 10727083.7
(22) Date de dépôt: 03.05.2010
(51) Int. Cl.: B60R 5/04

(54) **DISPOSITIF DE SÉPARATION D'UNE ZONE DE RANGEMENT DE VÉHICULE, À MOYEN(S) D'ARRÊT BIDIRECTIONNEL**
VORRICHTUNG ZUM UNTERTEILEN EINES LAGERBEREICHS EINES FAHRZEUGS UNTER VERWENDUNG VON/EINES ZWEIWEGEANSCHLAGMITTELN/S
DEVICE FOR DIVIDING A STORAGE AREA OF A VEHICLE USING (A) TWO-WAY STOP MEANS

(30) Priorité: 15.05.2009 FR 0953218
(43) Date de publication de la demande: 21.03.2012
(73) Titulaire: Peugeot Citroën Automobiles SA, 78140 Vélizy-Villacoublay (FR)
(72) Inventeur: SEVETIER, André, F-75016 Paris (FR)
(74) Mandataire: Fernandez, Francis Lionel
(86) Numéro de dépôt international: PCT/FR2010/050837
(87) Numéro de publication internationale: WO 2010/130917

(56) Documents cités:
- EP-A- 1 378 397
- EP-A- 2 008 871
- EP-B- 1 501 702
- DE-A1- 10 037 702
- FR-A- 2 921 314
- JP-A- 2003 312 368

## Description

L'invention concerne les équipements (ou accessoires) qui équipent certains véhicules, éventuellement automobiles, et plus précisément les dispositifs destinés à séparer en deux sous-parties une zone de rangement d'un véhicule, éventuellement de type automobile.

Certaines zones de rangement de certains véhicules, éventuellement de type automobile, étant volumineuses, elles peuvent servir à ranger temporairement de nombreux objets, ce qui est réellement avantageux. Cependant, il peut arriver que des objets à ranger soient plus fragiles que d'autres. Dans ce cas, il est souhaitable de placer les objets les plus fragiles dans une sous-partie de la zone de rangement et les objets moins fragiles dans une autre sous-partie de la zone de rangement.

Pour ce faire, on peut par exemple utiliser un dispositif de séparation destiné à séparer la zone de rangement en deux sous-parties. Un tel dispositif peut par exemple comporter un rideau amovible, en tissu ou à lames, monté sur un cylindre subissant une force de rappel élastique. Cependant, ce type de dispositif ne peut généralement supporter qu'une faible charge.

On peut également utiliser un dispositif de séparation comprenant une tablette de support pouvant supporter une charge d'environ 100 kg et dont deux extrémités opposées peuvent coulisser dans deux chemins de came en regard, équipés de moyens anti-retour destinés à n'autoriser le coulissement des extrémités de tablette que selon un unique sens. Un tel dispositif est par exemple décrit dans le document brevet EP 2008871. Le sens du coulissement dans les chemins de came étant unidirectionnel, ces derniers doivent présenter une forme relativement complexe afin de permettre le replacement de la tablette dans une position supérieure, ce qui ne s'avère pas très pratique pour l'usager et occupe une place (perdue) relativement importante dans la zone de rangement. En outre, ce type de dispositif autorise un positionnement de la tablette à au moins un niveau intermédiaire, entre le plancher (ou fond) de la zone de rangement et sa position supérieure, si bien qu'il fait perdre inutilement de la place lorsque l'on n'a pas besoin de la tablette (puisque sa tablette ne peut alors être que placée dans sa position intermédiaire).

L'invention a pour but de proposer une solution alternative qui ne présente pas tout ou partie des inconvénients précités.

Elle propose à cet effet un dispositif, dédié à la séparation d'une zone de rangement définie par une structure d'un véhicule, éventuellement de type automobile, et comprenant :
- une tablette comprenant une partie avant munie au niveau de deux extrémités opposées de deux moyens de couplage, et
- deux moyens de guidage propres à être définis en deux endroits en regard de la zone de rangement, agencés de manière à guider les moyens de couplage pour permettre un déplacement guidé de la partie avant de la tablette entre une position supérieure, dans laquelle elle est propre à séparer la zone de rangement en deux sous parties superposées, et une position inférieure, dans laquelle elle repose sur une partie de la structure définissant le plancher de la zone de rangement, et comprenant, dans une partie intermédiaire de l'un au moins d'entre eux, un moyen d'arrêt bidirectionnel propre à interdire un déplacement vers l'avant de l'un des moyens de couplage lorsque la tablette est dans sa position supérieure, et à permettre le passage de ce moyen de couplage soit vers l'avant, en cas de poussée exercée sur la tablette pour la faire passer de sa position supérieure vers sa position inférieure, soit vers l'arrière, en cas de traction exercée sur ladite tablette pour la faire passer de sa position inférieure vers sa position supérieure.

Le dispositif de séparation selon l'invention peut comporter d'autres caractéristiques qui peuvent être prises séparément ou en combinaison, et notamment :
- le moyen d'arrêt peut être propre à être déformé par le moyen de couplage correspondant lorsque l'on pousse la tablette vers l'avant pour la faire passer de sa position supérieure vers sa position inférieure, ou inversement lorsque l'on tire la tablette vers l'arrière pour la faire passer de sa position inférieure vers sa position supérieure ;
   ➢ le moyen d'arrêt peut être agencé sous la forme d'une lame flexible précontrainte ;
- les moyens de guidage peuvent être agencés sous la forme de roulettes montées à rotation libre respectivement sur les deux extrémités opposées de la partie avant de la tablette ;
- chaque moyen de guidage peut être agencé sous la forme d'une glissière présentant une forme choisie et munie d'un logement central propre à permettre le coulissement de l'un des moyens de couplage ;
   ➢ chaque glissière peut comprendre une extrémité libre où le logement central débouche vers l'extérieur de manière à permettre l'extraction du moyen de guidage correspondant en vue du retrait de la tablette ;
      - l'extrémité libre peut être destinée à être placée dans le véhicule dans une position angulaire orientée vers le haut de la zone de rangement et différant d'au moins 20° par rapport à un plan horizontal du véhicule.

L'invention propose également un véhicule comprenant une structure définissant une zone de rangement comprenant un dispositif de séparation du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue de côté, un exemple de réalisation de dispositif de séparation selon l'invention implanté dans une partie arrière d'un véhicule automobile, avec matérialisation de trois positions différentes de la tablette,
- la figure 2 illustre schématiquement, dans une vue en coupe selon un plan défini par les directions longitudinale et verticale du véhicule, une partie de la glissière droite et une partie de la tablette du dispositif de séparation de la figure 1, et
- la figure 3 illustre schématiquement, dans une vue du dessus, le dispositif de séparation des figures 1 et 2.

Les dessins annexés pourront non seulement servir à compléter l'invention, mais aussi contribuer à sa définition, le cas échéant.

L'invention a pour but d'offrir un dispositif de séparation (D) destiné à séparer une zone de rangement (ZR) d'un véhicule (V) en deux sous-parties (SPi (i = 1 ou 2)).

Dans ce qui suit, on considère, à titre d'exemple non limitatif, que le véhicule est de type automobile, comme par exemple une voiture. Mais, l'invention n'est pas limitée à ce type de véhicule. Elle concerne en effet tout type de véhicule comprenant une zone de rangement pouvant être séparée en deux sous-parties.

Par ailleurs, on considère dans ce qui suit, à titre d'exemple non limitatif, que la zone de rangement (ZR) est définie par la partie arrière de la structure (SV) du véhicule (V), laquelle peut être éventuellement un coffre arrière. Mais, l'invention n'est pas limitée à ce type d'application. Elle concerne en effet toute zone de rangement quel que soit son emplacement, y compris dans la partie avant du véhicule, notamment lorsque le moteur est implanté à l'arrière.

En outre, dans ce qui suit on appellera « direction longitudinale » une direction qui est sensiblement parallèle aux portes latérales du véhicule (V) et contenue dans un plan horizontal sensiblement parallèle au plancher du véhicule (V), « direction transversale » une direction qui est perpendiculaire à la direction longitudinale et contenue dans ledit plan horizontal, et « direction verticale » une direction qui est perpendiculaire audit plan horizontal.

De plus, dans ce qui suit on appellera « partie avant (AV) du véhicule » la partie qui comprend le moteur, lorsqu'il est situé devant les passagers avant, et « partie arrière (AR) du véhicule » la partie qui comprend généralement la zone de rangement (ZR) arrière, laquelle est située derrière le dernier rang de sièges (SA).

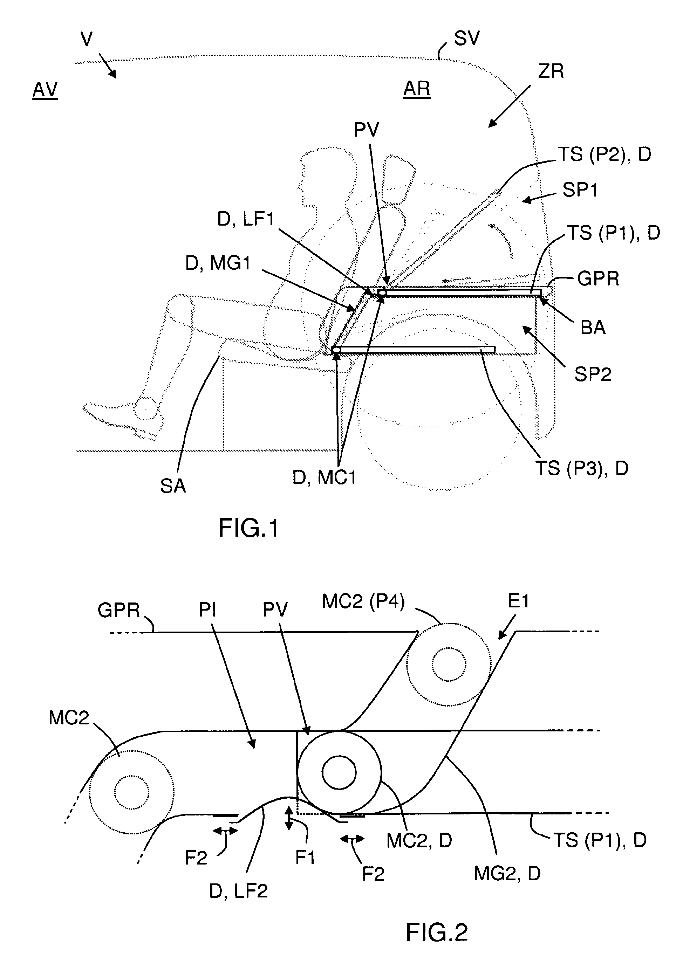

On a schématiquement représenté sur les figures 1 à 3 un exemple de réalisation non limitatif d'un dispositif (de séparation) D selon l'invention. Comme illustré, un tel dispositif D comprend une tablette TS et deux moyens de guidage MGi (i = 1 ou 2) couplés entre eux (et ici installés derrière les sièges arrière SA du véhicule V).

La tablette TS comprend une partie avant PV qui est munie, au niveau de deux extrémités opposées, de deux moyens de couplage MCi. On entend ici par « partie avant PV » la partie de la tablette TS qui est orientée vers l'avant AV du véhicule V, par opposition avec la « partie arrière » qui est la partie de la tablette TS qui est orientée vers l'arrière AR du véhicule V.

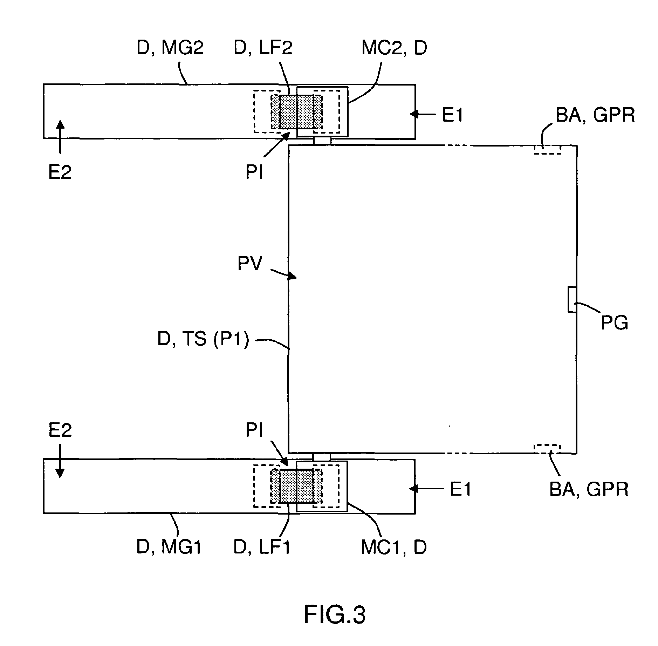

Dans l'exemple non limitatif illustré sur la figure 3, la tablette TS est sensiblement rectangulaire. Mais cela n'est pas obligatoire. Elle peut en effet, par exemple, comporter des décrochements sur ses côtés longitudinaux et/ou transversaux.

Par exemple, et non limitativement, les deux moyens de couplage MCi sont des roulettes qui sont montées à rotation libre respectivement sur les deux extrémités opposées de la partie avant PV de la tablette TS (et plus précisément sur ses deux bords longitudinaux (droit et gauche)). On notera que les moyens de couplage MCi peuvent se présenter sous d'autres formes, et notamment des plots ou des axes, dès lors qu'ils assurent un couplage avec les moyens de guidage MGi.

Les deux moyens de guidage MGi sont définis en deux endroits qui sont sensiblement en regard l'un de l'autre au sein de la zone de rangement ZR.

Dans l'exemple non limitatif illustré sur les figures 1 et 2, les deux moyens de guidage MGi sont définis sur les éléments de garnissage GPR qui sont solidarisés à la structure SV du véhicule au niveau des passages des roues arrières. Ils peuvent être rapportés sur ces éléments de garnissage GPR ou bien faire partie intégrante de ces derniers (GPR). Mais, ils pourraient être directement solidarisés à une partie structurelle SV du véhicule V.

Ces moyens de guidage MGi sont agencés de manière à guider les moyens de couplage MCi pour permettre le déplacement de la partie avant PV de la tablette TS entre une position supérieure P1 (illustrée sur les figures 1 à 3), dans laquelle elle (TS) sépare la zone de rangement ZR en deux sous-parties SPj (j = 1 ou 2) superposées, et une position inférieure P3 (illustrée sur la figure 1), dans laquelle elle (TS) repose sur la partie de la structure SV qui définit le plancher de la zone de rangement ZR.

On comprendra que lorsque la tablette TS est dans sa position inférieure P3, elle ne réduit quasiment pas le volume de la zone de rangement ZR puisqu'elle repose sur le plancher qui définit son fond. Par ailleurs, lorsque la tablette TS est dans sa position supérieure P1, elle permet non seulement de cacher à l'abri des regards les objets qui sont situés dans la sous-partie inférieure SP2 (elle définit alors une espèce de faux plancher), mais également de supporter des objets qui sont situés dans la sous-partie supérieure SP1, même si ces derniers sont lourds (bien entendu sous réserve qu'elle présente une structure suffisamment rigide).

On comprendra également que lorsque la tablette TS est dans sa position supérieure P1, seule sa partie avant PV est soutenue par ses moyens de couplage MGi. Par conséquent, une autre partie de la tablette TS, par exemple sa partie arrière, doit être également soutenue par exemple par au moins une butée. Pour ce faire, on peut par exemple prévoir deux butées longitudinales BA sur chacun des deux côtés longitudinaux de la structure SV du véhicule V (par exemple dans les éléments de garnissage GPR) ou bien une ou deux butées transversales sur le côté transversal de la structure SV du véhicule V (par exemple sur la partie interne de la carrosserie (éventuellement la porte de coffre)).

Lorsque la tablette TS est dans sa position supérieure P1 et que l'on souhaite accéder à la sous-partie inférieure SP2 pour prendre ou placer un objet, il suffit de l'entraîner en rotation vers le haut jusqu'à une position intermédiaire P2 adaptée à cet effet (et illustrée sur la figure 1). Afin de faciliter cet entraînement en rotation, et comme illustré non limitativement sur la figure 3, la tablette TS peut par exemple comporter au niveau de sa partie arrière un élément de préhension, comme par exemple une poignée ou un anneau PG (de préférence rabattable).

Chaque moyen de guidage MGi peut par exemple se présenter sous la forme d'une glissière (ou d'un rail) présentant une forme choisie et munie d'un logement central agencé de manière à permettre le coulissement du moyen de couplage MCi correspondant. Par exemple et comme illustré sur les figures 1 et 2, chaque glissière MGi peut comporter une partie intermédiaire PI sensiblement horizontale où se trouve logée la roulette MCi lorsque la tablette TS est dans sa position supérieure P1, et prolongée vers l'avant par une partie sensiblement linéaire, orientée vers le bas et terminée par une extrémité E2 située sensiblement au niveau du fond de la zone de rangement ZR et où se trouve logée la roulette MCi lorsque la tablette TS est dans sa position inférieure P3.

L'un au moins des deux moyens de guidage MGi comprend, dans sa partie intermédiaire PI (c'est-à-dire située entre ses deux extrémités opposées dites supérieure E1 et inférieure E2), un moyen d'arrêt bidirectionnel LF1 ayant deux fonctions. Une première fonction consiste à interdire un déplacement vers l'avant du moyen de couplage MCi correspondant (ici une roulette) lorsque la tablette TS est dans sa position supérieure P1. Une seconde fonction consiste à permettre un passage bidirectionnel du moyen de couplage MCi correspondant, c'est-à-dire soit vers l'avant en cas de poussée exercée par un usager sur la tablette TS pour la faire passer de sa position supérieure P1 vers sa position inférieure P3, soit vers l'arrière en cas de traction exercée sur la tablette TS pour la faire passer de sa position inférieure P3 vers sa position supérieure P1.

Dans l'exemple non limitatif illustré sur la figure 3, chaque glissière MG1 est couplée à un moyen d'arrêt LFi. Mais, cela n'est pas obligatoire. Seule l'une des deux glissières MGi pourrait être couplée à un moyen d'arrêt.

Afin de permettre le déplacement bidirectionnel précité, chaque moyen d'arrêt LFi peut par exemple être déformable lorsqu'il subit une contrainte sensiblement suivant la direction longitudinale. Ainsi, il peut être déformé par le moyen de couplage MCi correspondant lorsqu'un usager pousse la tablette TS vers l'avant AV pour la faire passer de sa position supérieure P1 vers sa position inférieure P3, ou inversement lorsqu'un usager tire la tablette TS vers l'arrière pour la faire passer de sa position inférieure P3 vers sa position supérieure P1.

Par exemple et non limitativement, le moyen d'arrêt déformable LFi peut être agencé sous la forme d'une lame flexible précontrainte (ou lame ressort). Cet exemple de réalisation est mieux illustré sur la figure 2. Chaque lame flexible LFi présente une partie centrale, logée dans le logement central de la glissière MGi correspondante et ayant une courbure initiale, et deux parties d'extrémité prolongeant cette partie centrale courbée vers l'avant et vers l'arrière et logées sous cette même glissière MGi. Dans ce cas, lorsque l'on pousse la tablette TS vers l'avant AV sa partie avant PV déforme la partie centrale courbée de chaque lame flexible LFi suivant une direction sensiblement verticale (flèche bidirectionnelle F1 de la figure 2), et cette déformation est absorbée par un déplacement longitudinal (flèche bidirectionnelle F2 de la figure 2) de l'une au moins des deux parties d'extrémité de chaque lame flexible LFi. Cette déformation sous contrainte libère le passage dans la glissière MGi et donc permet au moyen de couplage MCi correspondant de poursuivre son coulissement vers l'avant AV ou vers l'arrière AR dans cette glissière MGi.

On notera que les moyens d'arrêt LFi peuvent se présenter sous d'autres formes que des lames flexibles. Ainsi, ils peuvent par exemple se présenter chacun sous la forme d'une espèce de chicane constituant une sous-partie d'une glissière MGi.

Comme cela est illustré non limitativement sur la figure 2, l'extrémité supérieure (libre) E1 de chaque glissière MGi, qui prolonge la partie intermédiaire PI, peut être ouverte vers l'extérieur (logement central débouchant vers l'extérieur) afin de permettre l'extraction du moyen de guidage MGi correspondant et donc le retrait de la tablette TS. Cette extraction est destinée à permettre l'utilisation de l'intégralité de la zone de rangement ZR, voire même l'utilisation de la tablette TS en tant que plateau à l'intérieur du véhicule V ou à l'extérieur de ce dernier (V).

Comme illustré, cette extrémité supérieure (libre) E1 peut par exemple être placée dans le véhicule V dans une position angulaire qui est orientée vers le haut de sa zone de rangement ZR et qui diffère d'au moins 20° par rapport au plan horizontal du véhicule V. Dans ce cas, lorsqu'un usager veut retirer la tablette TS, il lui suffit de saisir sa partie arrière, par exemple grâce à la poignée (ou à l'anneau) PG qu'elle comprend éventuellement, puis de faire coulisser les deux roulettes MCi vers le haut, en exerçant une traction, des parties intermédiaires PI des glissières MGi (où elles sont placées dans la position supérieure P1) vers les extrémités supérieures E1 de ces mêmes glissières MGi (où elles sont libres de sortir dans la position d'extraction P4).

On notera que la tablette TS peut par exemple être réalisée par moulage dans un matériau synthétique rigide, comme par exemple et non limitativement un plastique.

L'invention ne se limite pas aux modes de réalisation de dispositif de séparation et de véhicule décrits ci-avant, seulement à titre d'exemple, mais elle englobe toutes les variantes que pourra envisager l'homme de l'art dans le cadre des revendications ci-après.

## Revendications

1. Dispositif (D) de séparation d'une zone de rangement (ZR) définie par une structure (SV) d'un véhicule (V), comprenant i) une tablette (TS) comprenant une partie avant (PV) munie au niveau de deux extrémités opposées de deux moyens de couplage (MCi), et ii) deux moyens de guidage (MGi) propres à être définis en deux endroits en regard de ladite zone de rangement (ZR), agencés de manière à guider lesdits moyens de couplage (MCi) pour permettre un déplacement guidé de ladite partie avant (PV) de la tablette (TS) entre une position supérieure dans laquelle elle (TS) est propre à séparer ladite zone de rangement (ZR) en deux sous parties superposées et une position inférieure dans laquelle elle (TS) repose sur une partie de ladite structure (SV) définissant le plancher de ladite zone de rangement (ZR), caraterisé en ce que qu'il comprend dans une partie intermédiaire (PI) de l'un au moins d'entre eux (MGi), un moyen d'arrêt bidirectionnel (LFi) propre à interdire un déplacement vers l'avant de l'un desdits moyens de couplage (MCi) lorsque ladite tablette (TS) est dans sa position supérieure, et à permettre le passage de ce moyen de couplage (MCi) soit vers l'avant en cas de poussée exercée sur ladite tablette (TS) pour la faire passer de sa position supérieure vers sa position inférieure, soit vers l'arrière en cas de traction exercée sur ladite tablette (TS) pour la faire passer de sa position inférieure vers sa position supérieure.

2. Dispositif selon la revendication 1, **caractérisé en ce que** ledit moyen d'arrêt (LFi) est propre à être déformé par le moyen de couplage (MCi) correspondant lorsque l'on pousse ladite tablette (TS) vers l'avant pour la faire passer de sa position supérieure vers sa position inférieure ou inversement lorsque l'on tire ladite tablette (TS) vers l'arrière pour la faire passer de sa position inférieure vers sa position supérieure.

3. Dispositif selon la revendication 2, **caractérisé en ce que** ledit moyen d'arrêt (LFi) est agencé sous la forme d'une lame flexible précontrainte.

4. Dispositif selon l'une des revendications 1 à 3, **caractérisé en ce que** lesdits moyens de guidage (MGi) sont agencés sous la forme de roulettes montées à rotation libre respectivement sur lesdites deux extrémités opposées de la partie avant (PV) de la tablette (TS).

5. Dispositif selon l'une des revendications 1 à 4, **caractérisé en ce que** chaque moyen de guidage (MGi) est agencé sous la forme d'une glissière présentant une forme choisie et munie d'un logement central propre à permettre le coulissement de l'un desdits moyens de couplage (MCi).

6. Dispositif selon la revendication 5, **caractérisé en ce que** chaque glissière (MGi) comprend une extrémité libre (E1) où ledit logement central débouche vers l'extérieur de manière à permettre l'extraction du moyen de guidage (MGi) correspondant en vue du retrait de ladite tablette (TS).

7. Dispositif selon la revendication 6, **caractérisé en ce que** ladite extrémité libre (E1) est destinée à être placée dans ledit véhicule (V) dans une position angulaire orientée vers le haut de la zone de rangement (ZR) et différant d'au moins 20° par rapport à un plan horizontal dudit véhicule (V).

8. Utilisation du dispositif de séparation (D) selon l'une des revendications 1 à 7 dans une zone de rangement (ZR) définie dans un coffre de véhicule (V).

9. Véhicule (V) comprenant une structure (SV) définissant une zone de rangement (ZR), **caractérisé en ce qu'**il comprend dans ladite zone de rangement (ZR) un dispositif de séparation (D) selon l'une des revendications 1 à 7.

## Patentansprüche

1. Vorrichtung (D) zum Trennen einer Ablagezone (ZR), die durch eine Struktur (SV) eines Fahrzeugs (V) bestimmt wird, umfassend i) eine Ablageplatte (TS) mit einem vorderen Abschnitt (PV), der im Bereich von zwei gegenüberliegenden Enden mit Kopplungsvorrichtungen (MCi) ausgestattet ist, und ii) zwei Führungsvorrichtungen (MGi), die sich für eine Anordnung an zwei Stellen gegenüber der besagten Ablagezone (ZR) eignen, und so angeordnet sind, um die besagten Kopplungsvorrichtungen (MCi) zu führen, um eine geführte Bewegung des besagten vorderen Abschnitts (PV) der Ablageplatte (TS) zwischen einer oberen Stellung, in der sich diese (TS) dazu eignet, die besagte Ablagezone (ZR) in zwei übereinander liegende Unterabschnitte zu trennen, und einer unteren Stellung zu ermöglichen, in der sie (TS) auf einem Abschnitt der besagten Struktur (SV) aufliegt, die den Boden der besagten Ablagezone (ZR) bestimmt, **dadurch gekennzeichnet, dass** sie in einem Zwischenabschnitt (PI) zumindest einer der Führungsvorrichtungen (MGi) eine in zwei Richtungen wirksame Stoppvorrichtung (LFi) umfasst, die sich dazu eignet, eine Vorwärtsbewegung einer der besagten Kopplungsvorrichtungen (MCi) zu unterbinden, wenn sich die besagte Ablageplatte (TS) in ihrer oberen Stellung befindet, und den Durchlauf dieser Kopplungsvorrichtung (MCi) entweder nach vorne zu ermöglichen, wenn man die besagte Ablageplatte (TS) anschiebt, um sie von der oberen in die untere Stellung zu bringen, oder nach hinten, wenn man an der besagten Ablageplatte (TS) zieht, um sie von der unteren in die obere Stellung zu bringen.

2. Vorrichtung nach Anspruch 1, **dadurch gekennzeichnet, dass** die besagte Stoppvorrichtung (LFi) durch die entsprechende Kopplungsvorrichtung (MCi) verformt werden kann, wenn man die besagte Ablageplatte (TS) nach vorne schiebt, um sie von der oberen in die untere Stellung zu bringen, oder umgekehrt, wenn man die besagte Ablageplatte (TS) nach hinten zieht, um sie von der unteren in die obere Stellung zu bringen.

3. Vorrichtung nach Anspruch 2, **dadurch gekennzeichnet, dass** die besagte Stoppvorrichtung (LFi) in Form einer vorgespannten flexiblen Gleitkufe angeordnet ist.

4. Vorrichtung nach einem der Ansprüche 1 bis 3, **dadurch gekennzeichnet, dass** die besagten Führungsvorrichtungen (MGi) in Form von Rollen angeordnet sind, die jeweils frei drehend an den beiden besagten gegenüberliegenden Enden des vorderen Abschnitts (PV) der Ablageplatte (TS) montiert sind.

5. Vorrichtung nach einem der Ansprüche 1 bis 4, **dadurch gekennzeichnet, dass** jede Führungsvorrichtung (MGi) in Form einer Gleitschiene angeordnet ist, die eine gewählte Form aufweist und mit einer mittleren Aufnahme ausgestattet ist, die sich dazu eignet, die Gleitbewegung einer der besagten Kopplungsvorrichtungen (MCi) zu ermöglichen.

6. Vorrichtung nach Anspruch 5, **dadurch gekennzeichnet, dass** jede Gleitschiene (MGi) ein freies Ende (E1) umfasst, an dem die besagte mittlere Aufnahme so nach außen mündet, dass die entsprechende Führungsvorrichtung (MGi) herausgenommen werden kann, um auch die besagte Ablageplatte (TS) herauszunehmen.

7. Vorrichtung nach Anspruch 6, **dadurch gekennzeichnet, dass** das besagte freie Ende (E1) dazu bestimmt ist, im besagten Fahrzeug (V) in einer Winkelstellung angeordnet zu werden, die in den oberen Bereich der Ablagezone (ZR) gerichtet ist, und die von einer waagrechten Ebene des besagten Fahrzeugs (V) um mindestens 20° abweicht.

8. Verwendung der Trennvorrichtung (D) nach einem der Ansprüche 1 bis 7 in einer Ablagezone (ZR), die in einem Fahrzeug-Kofferraum (V) angeordnet ist.

9. Fahrzeug (V) mit einer Struktur (SV) zur Bestimmung einer Ablagezone (ZR), **dadurch gekennzeichnet, dass** es in der besagten Ablagezone (ZR) eine Trennvorrichtung (D) nach einem der Ansprüche 1 bis 7 umfasst.

## Claims

1. Device (D) for separating a storage area (ZR) defined by a structure (SV) of a vehicle (V), comprising i) a shelf (TS) comprising a front part (PV) provided at two opposite ends with two coupling means (MCi), and ii) two guidance means (MGi) able to be defined at two points facing said storage area (ZR), arranged so as to guide said coupling means (MCi) to allow a guided movement of said front part (PV) of the shelf (TS) between an upper position in which it (TS) is able to separate said storage area (ZR) into two superimposed sub-parts and a lower position in which it (TS) rests on a part of said structure (SV) defining the floor of said storage area (ZR), **characterised in that** it comprises, in an intermediate part (PI) of at least one of them (MGi), a bidirectional stop means (LFi) able to prevent a forward movement of one of said coupling means (MCi) when said shelf (TS) is in its upper position, and to allow passage of this coupling means (MCi) either forwards in the case of a thrust and exerted on said shelf (TS) to make it pass from its upper position to its lower position, or rearwards in the case of traction exerted on said shelf (TS) to make it pass from its lower position to its upper position.

2. Device according to claim 1 **characterised in that** said stop means (LFi) is able to be deformed by the corresponding coupling means (MCi) when said shelf (TS) is pushed forwards to make it pass from its upper position to its lower position or vice versa when said shelf (TS) is pulled rearwards in order to make it pass from its lower position to its upper position.

3. Device according to claim 2 **characterised in that** said stop means (LFi) is arranged in the form of a prestressed flexible blade.

4. Device according to one of claims 1 to 3, **characterised in that** said guidance means (MGi) are arranged in the form of wheels mounted for free rotation respectively on said two opposite ends of the front part (PV) of the shelf (TS).

5. Device according to one of claims 1 to 4, **characterised in that** each guidance means (MGi) is arranged in the form of a runner having a chosen shape and provided with a central housing able to allow sliding of one of said coupling means (MCi).

6. Device according to claim 5, **characterised in that** each runner (MGi) comprises a free end (E1) where said central housing emerges outwards so as to enable the corresponding guidance means (MGi) to be extracted with a view to removal of said shelf (TS).

7. Device according to claim 6, **characterised in that** said free end (E1) is intended to be placed in said vehicle (V) in an angular position oriented towards the top of the storage area (ZR) and differing by at least 20% with respect to a horizontal plane of said vehicle (V).

8. Use of the separation device (D) according to one of claims 1 to 7 in a storage area (ZR) defined in a luggage compartment of a vehicle (V).

9. Vehicle (V) comprising a structure (SV) defining a storage area (ZR), **characterised in that** it comprises, in said storage area (ZR), a separation device (D) according to one of claims 1 to 7.
